# EUROPÄISCHE PATENTSCHRIFT

(11) **EP 1 249 990 B1**
(45) Veröffentlichungstag und Bekanntmachung des Hinweises auf die Patenterteilung: **06.04.2005**
(21) Anmeldenummer: 02008004.0
(22) Anmeldetag: 10.04.2002
(51) Int. Cl.: H04M 1/02, H04M 1/24

(54) **Handapparat**
Handset
Combiné téléphonique

(30) Priorität: 12.04.2001 DE 10118715
(43) Veröffentlichungstag der Anmeldung: 16.10.2002
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Otten, Herbert

(56) Entgegenhaltungen:
- EP-A- 1 028 574
- WO-A-00/46968
- US-A- 6 128 515

## Beschreibung

Die Erfindung betrifft einen Handapparat nach dem Oberbegriff des Anspruchs 1.

Aus dem Stand der Technik sind Handapparate bekannt, die aus einer Oberschale und einer Unterschale bestehen. Bei diesen sind die Tastatur und das Display in der Oberschale angeordnet und der Lautsprecher und das Mikrofon befinden sich in der Unterschale. Die Tastatur besteht aus einer Schaltmatte und einer Kontaktplatte, welche auf der die Elektronik tragenden Platine angeordnet ist. Zur verschiebesicheren Befestigung der Tastatur ist die Leiterplatte an der Oberschale befestigt, wobei die Schaltmatte zwischen der Oberschale und der Leiterplatte zu liegen kommt. Nachteilig an einem derartigen Aufbau eines Handapparats ist, dass eine Funktionsprüfung erst bei einem vollständig zusammengebauten Handapparat erfolgen kann, da die Oberschale nicht alle funktionswichtigen Bauteile, wie z.B. Stromquelle, Lautsprecher und Mikrofon enthält. Dies führt bei Funktionsstörungen zu einer aufwendigen Demontage von Ober- und Unterschale, die unter Umständen auch Beschädigungen an der Ober- und Unterschale verursacht.

Die WO-A1-0046968 beschreibt ein aus mehreren Komponenten bestehendes Mobil-Telefon mit einem mehrteiligen Gehäuse und einer darin angeordneten Kerneinheit, die die elektrischen und elektronischen Bauteile umfasst. Nachteilig ist dabei, dass die einzelnen Komponenten beim Zusammensetzen in einer bestimmten Lage, vorzugsweise horizontal, ausgerichtet werden müssen. Ansonsten kann die Schaltmatte der Tastatur beim Zusammenbau des Mobiltelefons bzw. bei Abnahme des Gehäusedeckels verrutschen, und, im ungünstigsten Fall, von der Kerneinheit herunter- bzw. aus dem Gehäusedeckel herausfallen.

Die US 6,128,515 beschreibt ein Mobil-Telefon, das mit einem GPS-Gerät kombiniert ist. Sie weist den bekannten Nachteil der Anordnung elektrischer Einheiten sowohl in der Oberschale als auch in der Unterschale auf.

Aufgabe der Erfindung ist es, einen Handapparat zu entwickeln, der einen rationellen Fertigungsablauf erlaubt und vor der vollständigen Montage Prüfmöglichkeiten bietet, wobei die einzelnen Komponenten beim Zusammenbau des Handapparates nicht gegeneinander verrutschen können.

Diese Aufgabe wird, ausgehend von den Merkmalen des Oberbegriffs des Anspruchs 1, erfindungsgemäß durch die kennzeichnenden Merkmale des Anspruchs 1 gelöst. In den Unteransprüchen sind vorteilhafte und zweckmäßige Weiterbildungen angegeben.

Der erfindungsgemäße Handapparat nimmt in bzw. an der Unterschale alle elektronischen bzw. elektrischen Bauteile auf. An der Oberschale sind ausschließlich mechanische, nicht-elektrische Bauteile festgelegt. Durch diese Verteilung der einzelnen Bauteile auf die Unterschale und die Oberschale ist es möglich, in der Fertigung zunächst elektrische bzw. elektronische Bauteile in der Unterschale zu montieren, diese einer Funktionsprüfung zu unterziehen und anschließend die Oberschale mit den mechanischen Einbauteilen aufzusetzen. Besonders vorteilhaft ist es, die Unterschale mit einem Lautsprecher, einem Mikrofon, einer Elektronikplatine, dem Display, einer Kontaktplatte für die Tastatur und der Energiequelle, die insbesondere als Akkumulator ausgebildet ist, zu bestücken. Hierdurch entsteht eine vollständige Funktionseinheit, die vom Akkumulator mit Strom versorgt ist und über die Kontaktplatte auch die Eingabe von Daten bzw. eine Teilprüfung der Tastatur zulässt.

Weiterhin ist es vorteilhaft, wenn die Oberschale eine Schaltmatte aufnimmt, welche zusammen mit der Kontaktplatte die Tastatur bildet, wobei für die Verbindung von Schaltmatte und Oberschale eine formschlüssige und/oder eine Klebeverbindung vorgesehen ist, welche vorzugsweise zwischen einer Oberseite der Schaltmatte und einer Unterseite oder einem Randbereich der Oberschale besteht. Hierdurch ist es möglich, die Schaltmatte ohne Beeinträchtigung ihrer Funktion an der Oberschale festzulegen und in jeder Lage sicher zu halten, so dass die Oberschale und die Schaltmatte in einer Position, in welcher die Schaltmatte unter der Oberschale hängt, auf die bestückte Unterschale aufsetzbar sind.

Erfindungsgemäß wird weiter vorgeschlagen, Oberschale und Unterschale durch Rastelemente, insbesondere Rasthaken zu verbinden, wobei die Rasthaken vorzugsweise an der Oberschale befestigt sind. Hierdurch ist eine Beeinträchtigung bei der Montage der elektrischen bzw. elektronischen Komponenten durch die Rasthaken vermieden. Weiterhin lässt sich eine derartige Verbindung einfach herstellen und erfordert keine zusätzlichen Fertigungsschritte wie z.B. Schrauben.

Durch die Anordnung der Kontaktplatte für die Tatstatur auf der Elektronikplatine ist für den Handapparat nur eine Platine erforderlich, was die Fertigung vereinfacht.

Die Anordnung des Displays auf der Elektronikplatine bringt den Vorteil, dass dieses beim Zusammenbau des Handapparats bereits vormontiert und positioniert ist.

Weiterhin ist es vorteilhaft, wenn die Elektronikplatine die Unterschale zur Oberschale hin abdeckt. Hierdurch wird auch der zwischen Unterschale und Elektronikplatine angeordnete Akkumulator sicher gehalten.

Weitere Einzelheiten der Erfindung werden in der Zeichnung anhand von schematisch dargestellten Ausführungsbeispielen beschrieben.

Hierbei zeigt:
- Fig. 1: eine Explosionszeichnung eines erfindungsgemäßen Handapparats,
- Fig. 2: eine schematische Schnittansicht einer an einer Oberschale befestigten Schaltmatte und
- Fig. 3: eine weitere schematische Schnittansicht einer an einer Oberschale befestigten Schaltmatte.

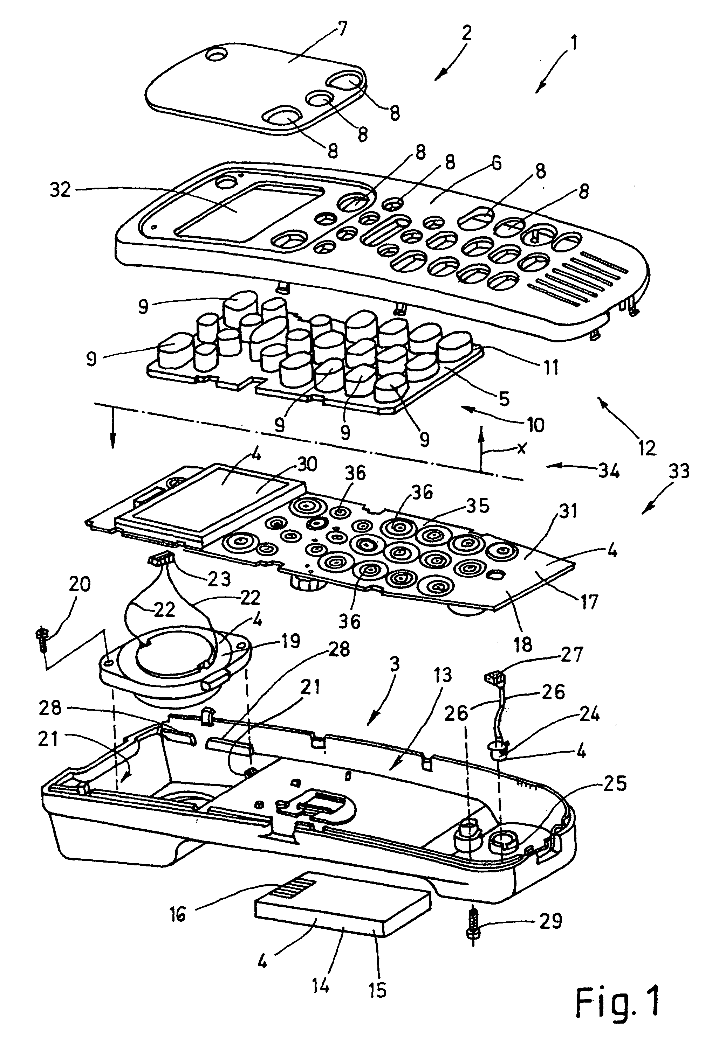

In Figur 1 ist ein Handapparat 1 in einer Explosionsansicht dargestellt. Der Handapparat 1 besteht aus einer Oberschale 2, einer Unterschale 3, elektrischen bzw. elektronischen Bauteilen 4 und einem mechanischen Bauteil 5. Die Oberschale ist zweiteilig ausgebildet und setzt sich aus einem Chassis 6 und einer Blende 7 zusammen. Die Oberschale 2 weist weiterhin Durchbrüche 8 für Tasten 9 einer Schaltmatte 10 auf. Die Schaltmatte 10 besteht aus einem Träger 11, auf dem die Tasten 9 angeordnet sind und wird zur Herstellung einer oberen Montageeinheit in Pfeilrichtung x in die Oberschale 2 eingeschoben, wobei die Tasten 9 durch die Durchbrüche 8 treten. Das Aufsetzen der Blende 7 auf das Chassis 6 erfolgt wahlweise vor oder nach dem Eindrücken der Schaltmatte 10. Die Unterschale 3 nimmt in einem Innenraum 13 die Energiequelle 14 bzw. den Akkumulator 15 auf, wobei dieser mit Kontakten 16 zur einer Elektronikplatine 17 bzw. Leiterplatte 18 orientiert ist. Weiterhin nimmt die Unterschale 3 einen Lautsprecher 19 auf, der über Schrauben 20 (zur Vereinfachung ist nur eine Schraube dargestellt) in an der Unterschale 3 angeordnete Dome 21 verschraubbar ist. Über Anschlusskabel 22 und einen Stecker 23 ist der Lautsprecher 19 mit einem nicht dargestellten Steckplatz auf der Elektronikplatine 17 verbindbar. Weiterhin nimmt die Unterschale 3 im Innenraum 13 ein Mikrofon 24 auf, das in eine an der Unterschale 3 angeformte Aufnahme 25 einrastbar ist. Das Mikrofon 24 weist Anschlusskabel 26 und einen Stecker 27 auf, über die es mit einem auf der Elektronikplatine 17 angeordneten, nicht dargestellten Steckplatz verbindbar ist. Zur Oberschale 2 ist die Unterschale 3 im vormontierten Zustand durch die Elektronikplatine 17 abgedeckt, welche an Konsolen 28 der Unterschale 3 aufliegt und über eine Schraube 29 mit der Unterschale 3 verschraubt ist. Als weiteres elektronisches Bauteil 4 ist ein Display 30 an einer Oberseite 31 der Elektronikplatine 17 angeordnet und auf eine Durchbrechung 32 in der Oberschale 2 ausgerichtet. Die Unterschale 3, die Energiequelle 14, der Lautsprecher 19, das Mikrofon 24, die Elektronikplatine 17 und das Display 30 bilden eine untere Montageeinheit 33, welche im zusammengebauten Zustand im Hinblick auf die elektronischen Funktionen des Handapparats 1 voll funktionsfähig ist. Über die Energiequelle 14 ist die Elektronikplatine 17 mit Energie versorgt und es können somit auch die an die Elektronikplatine 17 angeschlossenen elektrischen bzw. elektronischen Bauteile 4, das heißt der Lautsprecher 19, das Mikrofon 24 und das Display 30 betrieben werden. Auch eine Prüfung von Tastaturfunktionen ist möglich, da eine Tastatur 34 aus der Schaltmatte 10, welche in der Oberschale 2 angeordnet ist, und einer auf der Elektronikplatine 17 angeordneten Kontaktplatte 35 gebildet ist. Die Kontaktplatte 35 weist Kontaktbleche 36 auf, welche im vollständig zusammengebauten Zustand des Handapparats 1 durch die Tasten 9 der Schaltmatte 10 betätigt werden, welche aber auch im vormontierten Zustand der unteren Montageeinheit 33 mit einem Finger oder andere Hilfsmittel betätigbar sind. Nach der erfolgreichen Funktionsprüfung an der unteren Montageeinheit 33 erfolgt ein Zusammenbau der unteren Montageeinheit 33 mit einer oberen Montageeinheit 12.

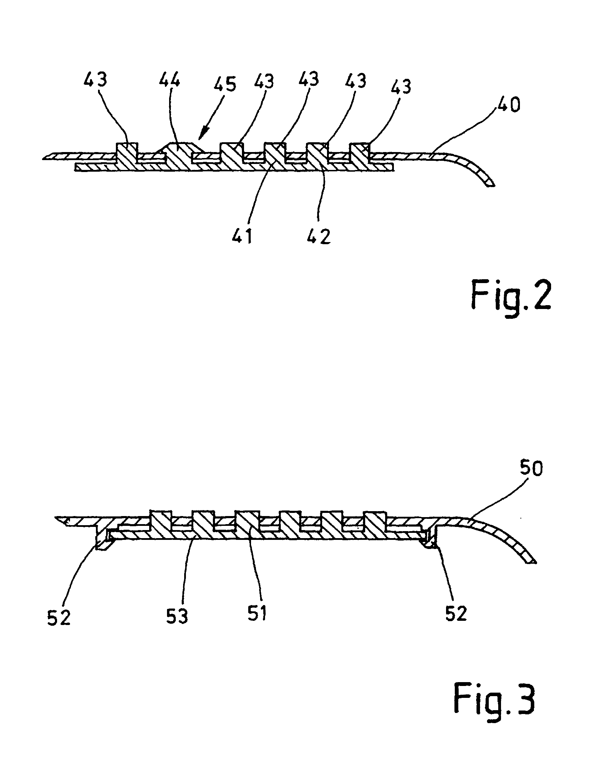

Figur 2 zeigt eine Schnittansicht durch eine Oberschale 40 mit einer an dieser angeordneten Schaltmatte 41. Die Schaltmatte 41 besteht aus einem Träger 42, Tasten 43 und einem Pilzzapfen 44, welcher einen Durchbruch 45 in der Oberschale 40 durchgreift und formschlüssig hintergreift. Durch den Pilzzapfen 44 ist die Schaltmatte 41 an der Oberschale 40 festgelegt. Somit ist es möglich die Oberschale 40 gemeinsam mit der Schaltmatte 41 in jeder beliebigen Position auf die untere Montageeinheit 33 aufzusetzen, ohne Gefahr zu laufen, die Schaltmatte 41 zu verlieren.

Figur 3 zeigt einen Schnitt durch eine Oberschale 50, an der eine Schaltmatte 51 festgelegt ist. Hierzu weist die Oberschale 50 Rasthaken 52 auf, welche einen Träger 53 der Schaltmatte 51 übergreifen.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, die Schaltmatte und die Oberschale miteinander zu verkleben.

### Bezugszeichenliste:

- 1: Handapparat
- 2: Oberschale
- 3: Unterschale
- 4: elektrisches bzw. elektronisches Bauteil
- 5: mechanisches Bauteil
- 6: Chassis
- 7: Blende
- 8: Durchbruch
- 9: Taste
- 10: Schaltmatte
- 11: Träger
- 12: obere Montageeinheit
- 13: Innenraum (von 3)
- 14: Energiequelle
- 15: Akkumulator
- 16: Kontakt
- 17: Elektronikplatine
- 18: Leiterplatte
- 19: Lautsprecher
- 20: Schraube (für 19)
- 21: Dom
- 22: Anschlusskabel (für 19)
- 23: Stecker (für 19)
- 24: Mikrofon
- 25: Aufnahme (für 24)
- 26: Anschlusskabel (für 24)
- 27: Stecker (für 24)
- 28: Konsole
- 29: Schraube
- 30: Display
- 31: Oberseite (von 17)
- 32: Durchbrechung (in 2)
- 33: untere Montageeinheit
- 34: Tastatur
- 35: Kontaktplatte
- 36: Kontaktblech
- 40: Oberschale
- 41: Schaltmatte
- 42: Träger
- 43: Taste
- 44: Pilzzapfen
- 45: Durchbruch
- 50: Oberschale
- 51: Schaltmatte
- 52: Rasthaken
- 53: Träger

## Patentansprüche

1. Handapparat (1) bestehend aus einer Oberschale (2, 40, 50) und einer Unterschale (3), mit Tastatur (34), Display (30), Lautsprecher (19) und Mikrofon (24) und Energiequelle (14), wobei das Display (30) und die Tastatur (34) zur Oberschale (2, 40, 50) ausgerichtet sind und der Lautsprecher (19) und das Mikrofon (24) zur Unterschale (3) ausgerichtet sind, wobei in der Unterschale (3) alle elektronischen bzw. elektrischen Bauteile (4, 14, 17, 19, 24, 30, 35) des Handapparats (1) befestigt sind und an der Oberschale (2, 40, 50) nur mechanische, nicht-elektrische Bauteile (5, 10, 41, 51) befestigt sind, **dadurch gekennzeichnet, dass** eine Schaltmatte (10, 41, 51) durch eine formschlüssige Verbindung (44, 52) und/oder durch eine Klebeverbindung, mit einer Unterseite oder einem Randbereich der Oberschale (2, 40, 50) verbunden ist.

2. Handapparat nach Anspruch 1, **dadurch gekennzeichnet, dass** die Unterschale (3) den Lautsprecher (19), das Mikrofon (24), eine Elektronikplatine (17, 18), das Display (30), eine Kontaktplatte (35) für die Tastatur (34) und die Energiequelle (14, 15) aufnimmt.

3. Handapparat nach einem der vorhergehenden Ansprüche, **dadurch gekennzeichnet, dass** die Oberschale (2, 40, 50) die Schaltmatte (10, 41, 51) für die Tastatur (34) aufnimmt.

4. Handapparat nach einem der vorhergehenden Ansprüche, **dadurch gekennzeichnet, dass** die Oberschale (2, 40 , 50) und die Unterschale (3) durch Rastelemente, wie Rasthaken (44, 52), verbunden sind.

5. Handapparat nach einem der Ansprüche 2 bis 4, **dadurch gekennzeichnet, dass** die Kontaktplatte (35) für die Tastatur (34) auf der Elektronikplatine (17, 18) angeordnet ist.

6. Handapparat nach einem der vorhergehenden Ansprüche, **dadurch gekennzeichnet, dass** das Display (30) auf der Elektronikplatine (17, 18) angeordnet ist.

7. Handapparat nach einem der Ansprüche 2 bis 6, **dadurch gekennzeichnet, dass** die Elektronikplatine (17, 18) die Unterschale (3) zu der Oberschale (2, 40, 50) hin abdeckt.

8. Handapparat nach einem der Ansprüche 2 bis 7, **dadurch gekennzeichnet, dass** die Energiequelle (14, 15) zwischen der Unterschale (3) und der Elektronikplatine (17, 18) angeordnet ist.

9. Handapparat nach Anspruch 1, **dadurch gekennzeichnet, dass** die Schaltmatte (10, 41, 51) zwischen der Oberschale (2, 40, 50) und der fest mit der Unterschale (3) verbundenen Kontaktplatte (35) eingeschlossen ist, wobei Schaltmatte (10, 41, 51) und Kontaktplatte (35) die Tastatur (34) bilden.

## Claims

1. A handset (1) consisting of an upper shell (2, 40, 50) and a lower shell (3), having a keypad (34), display (30), loudspeaker (19) and microphone (24) and energy source (14), wherein the display (30) and the keypad (34) are aligned to the upper shell (2, 40, 50) and the loudspeaker (19) and the microphone (24) are aligned to the lower shell (3), wherein all electronic and electric components (4, 14, 17, 19, 24, 30, 35) of the handset (1) are fixed in the lower shell (3) and only mechanical, non-electrical components (5, 10, 41, 51) are fixed to the upper shell (2, 40, 50),
**characterised in that** a switching mat (10, 41, 51) is connected to an underside or an edge region of the upper shell (2, 40, 50) by a positive connection (44, 52) and/or an adhesive joint.

2. A handset according to Claim 1,
**characterised in that** the lower shell (3) houses the loudspeaker (19), the microphone (24), a printed circuit board (17, 18), the display (30), a contact plate (35) for the keypad (34) and the energy source (14, 15).

3. A handset according to one of the preceding Claims,
**characterised in that** the upper shell (2, 40, 50) houses the switching mat (10, 41, 52) for the keypad (34).

4. A handset according to one of the preceding Claims,
**characterised in that** the upper shell (2, 40, 50) and the lower shell (3) are connected by snap-in elements, such as snap-in hooks (44, 52).

5. A handset according to one of Claims 2 to 4,
**characterised in that** the contact plate (35) for the keypad (34) is disposed on the printed circuit board (17, 18).

6. A handset according to one of the preceding Claims,
**characterised in that** the display (30) is disposed on the printed circuit board (17, 18).

7. A handset according to one of Claims 2 to 6,
**characterised in that** the printed circuit board (17, 18) covers the lower shell (3) towards the upper shell (2, 40, 50).

8. A handset according to one of Claims 2 to 7,
**characterised in that** the energy source (14, 15) is disposed between the lower shell (3) and the printed circuit board (17, 18).

9. A handset according to Claim 1,
**characterised in that** the switching mat (10, 41, 51) is enclosed between the upper shell (2, 40, 50) and the contact plate (35) connected securely to the lower shell (3), the switching mat (10, 41, 51) and contact plate (35) forming the keypad (34).

## Revendications

1. Combiné téléphonique (1) comportant une coque supérieure (2, 40, 50) et une coque inférieure (3), avec un clavier (34), un affichage (30), un haut-parleur (19) et un microphone (24) ainsi qu'une source d'énergie (14), l'affichage (30) et le clavier (34) étant organisés par rapport à la coque supérieure (2, 40, 50) et le haut-parleur (19) ainsi que le microphone (24) étant organisés par rapport à la coque inférieure (3), tous les composants électroniques et électriques (4, 14, 17, 19, 24, 30, 35) du combiné téléphonique (1) étant fixés dans la coque inférieure (3) et seuls des composants mécaniques, non électriques (5, 10, 41, 51) étant fixés au niveau de la coque supérieure (2, 40, 50),
**caractérisé en ce qu'**un support de touches (10, 41, 51) est relié à une face inférieure ou à une zone de bordure de la coque supérieure (2, 40, 50) par une liaison par correspondance de forme (44, 52) et/ou par une liaison par collage.

2. Combiné téléphonique selon la revendication 1,
**caractérisé en ce que** la coque inférieure (3) contient le haut-parleur (19), le microphone (24), une carte électronique (17, 18), l'affichage (30), une plaque de contact (35) pour le clavier (34) et la source d'énergie (14, 15).

3. Combiné téléphonique selon l'une des revendications précédentes,
**caractérisé en ce que** la coque supérieure (2, 40, 50) contient le support de touches (10, 41, 51) pour le clavier (34).

4. Combiné téléphonique selon l'une des revendications précédentes,
**caractérisé en ce que** la coque supérieure (2, 40, 50) et la coque inférieure (3) sont reliées par des éléments d'arrêt, tels que des crochets d'arrêt (44, 52).

5. Combiné téléphonique selon l'une des revendications 2 à 4,
**caractérisé en ce que** la plaque de contact (35) pour le clavier (34) est agencée sur la carte électronique (17, 18).

6. Combiné téléphonique selon l'une des revendications précédentes,
**caractérisé en ce que** l'affichage (30) est agencé sur la carte électronique (17, 18).

7. Combiné téléphonique selon l'une des revendications 2 à 6,
**caractérisé en ce que** la carte électronique (17, 18) recouvre la coque inférieure (3) en direction de la coque supérieure (2, 40, 50).

8. Combiné téléphonique selon l'une des revendications 2 à 7,
**caractérisé en ce que** la source d'énergie (14, 15) est agencée entre la coque inférieure (3) et la carte électronique (17, 18).

9. Combiné téléphonique selon la revendication 1,
**caractérisé en ce que** le support de touches (10, 41, 51) est inséré entre la coque supérieure (2, 40, 50) et la plaque de contact (35) reliée fixement à la coque inférieure (3), le support de touches (10, 41, 51) et la plaque de contact (35) formant le clavier (34).
